# EUROPÄISCHE PATENTANMELDUNG

(11) **EP 1 717 943 A2**
(43) Veröffentlichungstag der Anmeldung: **02.11.2006**
(21) Anmeldenummer: 06008259.1
(22) Anmeldetag: 21.04.2006
(51) Int. Cl.: H02P 8/18

(54) **Verfahren zur Ansteuerung eines Schrittmotors als geräuschreduzierter Ventilsantrieb**

(30) Priorität: 27.04.2005 DE 102005020681
(71) Anmelder: Saia-Burgess Dresden GmbH, 01257 Dresden (DE)
(72) Erfinder: Roschke, Thomas, Dr.-Ing., 01477 Arnsdorf bei Dresden (DE); Ritschel, Sten, Dipl.-Ing., 01728 Bannewitz (DE)
(74) Vertreter: Heyner, Klaus

(57) **Zusammenfassung**

Beschrieben wird ein Verfahren zur Ansteuerung eines Schrittmotors als geräuschreduzierter Ventilstellantrieb im Voll- oder Halbschrittbetrieb unter Verwendung einer Steuerung mit nachgeschaltetem Treiber, wobei die Steuerung und der Treiber zur impulsbetriebenen Phasenansteuerung des mit einem Verschlusskörper des Ventils gekoppelten Schrittmotors vorgesehen sind, und der Verschlusskörper zwischen einer ersten Endlage (4) und einer zweiten Endlage (6) schrittweise verfahrbar ist, wobei vor dem unmittelbaren Erreichen zumindest einer Endlage (4) eine Schrittverlusterkennung des Schrittmotors als Anschlagereignis (5) durch die Steuerung erfasst wird.

Die Erfindung zeichnet sich des Weiteren dadurch aus, dass nach dem Erreichen des Anschlagereignisses (5) der weitere geräuscharme Vortrieb des Verschlusskörpers bis zu einer Endlage (6) entweder mit einer veränderten Schrittfrequenz des Schrittmotors, d. h. im Antiresonanzmode, und/oder mit einer durch Pausen (8) voneinander abgrenzbaren Gruppen (7) von Schritten (3), d. h. im Burstmode erfolgt.

## Beschreibung

Die Erfindung betrifft ein Verfahren zur Ansteuerung eines Schrittmotors als geräuschreduzierter Ventilstellantrieb im Bereich der Endlagen des Verfahrwegs.

Schrittmotoren finden Verwendung in Baugruppen und Modulen in den Bereichen der Automobil- oder Bürokommunikation, der Medizintechnik, des Werkzeugbaus, der Konsumelektronik, der technischen Gebäudeausrüstung oder Messtechnik. Sie sind damit ein geeigneter Antrieb zur Umsetzung digitaler Informationen in mechanische Bewegung.

Durch die rasche Entwicklung der Halbleiterindustrie, insbesondere durch die größere Vielfältigkeit der Transistoren, Dioden und integrierten Schaltungen, werden Schrittmotoren nicht nur in preissensiblen Anwendungen eingesetzt, sondern auch dort, wo das mechanische Kommutierungssystem der Gleichstrommotoren die Zuverlässigkeit oder Lebensdauer eines Antriebes begrenzen.

Schrittmotoren werden wegen ihrer hohen Stellgenauigkeit und Zuverlässigkeit im Einsatz in einer offenen Steuerkette als Stellantriebe für mit Wasser oder Gas beaufschlagbare Ventile eingesetzt. Beispielsweise befinden sich in häuslich genutzten Heizthermen Regelventile, die zur Umschaltung zwischen dem Heizbetrieb und der Warmwasseraufbereitung dienen. Für die erforderliche lineare Stellbewegung verwendet man meist ein im Schrittmotor integriertes Spindel-Mutter-System welches den Schrittwinkel in eine Translation umsetzt. Die konstruktiven Anforderungen beschränken sich dabei nicht nur wegen der Häufigkeit der Umschaltung, respektive das Lastspiel, auf deren hohe Lebensdauer, sondern wegen der Platzierung im Wohnbereich auch auf eine geringe Geräuschentwicklung.

Ursächlich für die Geräuschentwicklung ist die Schrittbewegung des Antriebs und in diesem Zusammenhang die bei bestimmten Schrittfrequenzen auftretende Resonanzwirkung des gesamten Ventilantriebs zu nennen. Vor allem im Bereich der Endlagen des Ventils ist eine rotatorische Pendelbewegung des Rotors und des Stators sowie eine translatorische Pendelbewegung des mit dem Motor gekoppelten Verschlusskörpers zu verzeichnen, welche mit einer unerwünschten Geräuschentwicklung einhergehen.

Im Stand der Technik werden deshalb Ventilstellantriebe zum Zwecke des sekundären Schallschutzes gekapselt bzw. schwingungsisoliert gelagert. Diese Maßnahme erfordert jedoch einen nicht unerheblichen Fertigungsaufwand, welcher für die Massenproduktion von Ventilstellantrieben nicht oder nur teilweise gerechtfertigt ist.

Die Aufgabe der Erfindung besteht nunmehr darin, ein Verfahren zur Ansteuerung eines Schrittmotors als Ventilstellantrieb vorzuschlagen, mit dem unter Beibehaltung der erforderlichen Schließzeit des Ventils die im Wesentlichen durch Resonanzen hervorgerufene Geräuschentwicklung im Bereich der Endlagen des Ventils deutlich reduziert werden kann.

Nach der Konzeption der Erfindung erfolgt das Verfahren zur Ansteuerung eines Schrittmotors im Voll- oder Halbschrittbetrieb als geräuschreduzierter Ventilstellantrieb unter Verwendung einer Steuerung mit nachgeschaltetem Treiber, wobei die Steuerung und der Treiber zur impulsbetriebenen Phasenansteuerung des mit einem Verschlusskörper des Ventils gekoppelten Schrittmotors vorgesehen sind. Der Verschlusskörper ist zwischen einer ersten Endlage und einer zweiten Endlage schrittweise verfahrbar, wobei vor dem unmittelbaren Erreichen zumindest einer Endlage eine Schrittverlusterkennung des Schrittmotors als Anschlagereignis durch die Steuerung erfasst wird. Die Schrittverlusterkennung überwacht den Schrittmotor und zeigt das erste Berühren des Ventilsitzes frühzeitig an. Nach dem Eintreten des Anschlagereignisses erfolgt der weitere geräuscharme Vortrieb und die Verformung des Verschlusskörpers obwohl die Schrittausführung von Schrittverlusten und Schwingungen im Ventilsitz begleitet wird. Die Fahrt erfolgt dann bis zur Endlage mit einer veränderten, vorzugsweise verringerten Schrittfrequenz des Schrittmotors, d. h. im Antiresonanzmode und/oder mit einer durch Pausen voneinander abgrenzbaren Gruppe von Schritten, d. h. im Burstmode.

Bei einer weiteren Ausgestaltung der Erfindung kann als Anschlagereignis auch das Erreichen einer vorgebbaren Schrittanzahl detektiert werden. Diese Schrittanzahl kann so gewählt werden, dass unter allen Toleranzeinflüssen der jeweilige Ventilsitz noch nicht oder nur kurz berührt wird.

Das Anschlagereignis entspricht erfindungsgemäß dem ersten möglichen Kontakt zwischen dem Verschlusskörper und dem Ventilsitz. Das Verfahren zur Schrittverlusterkennung des Schrittmotors ist bereits Gegenstand der DE 101 51 825.0 und wird deshalb an dieser Stelle nicht weiter ausgeführt.

Die vorgebbare Schrittanzahl entspricht einer variablen Primärschrittanzahl und die Schritte nach dem Anschlagereignisses bis zum Erreichen einer Endlage entsprechen einer Sekundärschrittanzahl. Die Primarschrittanzahl und die Sekundärschrittanzahl ergänzen sich jedoch zu einer Gesamtschrittanzahl, die vom Antrieb zum vollständigen Verschließen des Ventils zwischen einer ersten Endlage und einer zweiten Endlage mittels des Verschlusskörpers absolviert werden.

Während nach dem Absolvieren der Primärschritte das Ventil i.d.R. bereits etwa zu 95% geschlossen ist, werden die sich daran anschließenden Sekundärschritte zur Kompensation der Stellwegtoleranzen des Ventilantriebs und zum vollständigen Verschluss des Ventils benötigt.

Als Stellwegtoleranzen sind hierbei die Toleranzen der Bauteilabmessungen des Ventils, der thermisch bedingte Längenänderungen des Ventilkörpers sowie der thermisch bedingten Längenänderungen der Dichtelemente des Verschlusskörpers zu nennen. Das Verhältnis zwischen der Anzahl der Primärschritte und der Anzahl der Sekundärschritte beträgt in der Praxis zwischen 5% und 20%.

Im Antiresonanzmode wird für die Sekundärschritte eine Sekundärschrittfrequenz gewählt, die vorzugsweise kleiner als die Primärschrittfrequenz der Primärschritte ist. Diese Sekundärschrittfrequenz, respektive verringerte Schrittfrequenz, beträgt etwa das 0,5 bis 0,1-fache der Primärschrittfrequenz. Es hat sich in der Praxis als besonders vorteilhaft erwiesen, wenn die Frequenz für die Primärschritte etwa 200 Hz und die Frequenz für die Sekundärschritte etwa 75 Hz beträgt.

Im Burstmode hingegen werden nach dem Erreichen des Anschlagereignisses die Sekundärschritte gruppenweise zusammengefasst, wobei die Schrittgruppen durch Pausen zeitlich voneinander getrennt sind. Die durch Pausen voneinander abgrenzbaren Gruppen von Schritten umfassen jeweils zwischen 2 und 12 Einzelschritte.

Sowohl im Antiresonanzmode als auch im Burstmode nimmt die resonanzarme Schrittbewegung des Antriebs bei verringerter Schrittfrequenz bzw. mittels Pausen voneinander abgrenzbaren Gruppen von Schritten einen für das menschliche Gehör nicht oder nur schlecht wahrnehmbaren Geräuschpegelwert annimmt.

Bei einer bevorzugten Ausgestaltung der Erfindung umfasst die Ansteuersequenz für den Schrittmotors nach Erreichen des Anschlagereignisses eine Kombination aus dem Antiresonanzmode und dem Burstmode. Das heißt, zum einen werden die Sekundärschritte gruppenweise zusammengefasst, und zum anderen wird die Frequenz der Einzelschritte innerhalb jeder Schrittgruppe verringert.

Durch das erfindungsgemäße Verfahren konnten die in der Regel durch Resonanzen hervorgerufenen Geräusche des Antriebs derart reduziert werden, dass auf eine Kapselung des Ventilstellantrieb zur Schallreduktion verzichtet werden kann. Diese Tatsache führt zu einem erheblichen Kostenvorteil bei der Fertigung des Antriebs.

Erfindungsgemäß kann zum Zeitpunkt des Erreichens der zweiten Endlage unter Verwendung der Steuerung und des Treibers eine Haltebestromung des Schrittmotors erfolgen, so dass der Verschlusskörper exakt im Ventilsitz platziert bleibt.

Da der Rotor nach dem Erreichen des Ventilsitzes dem Statorfeld nicht mehr folgen kann, kommt es zu periodischen Pendelbewegungen des Rotors. In dem typischer Weise verwendeten Vollschritt wiederholt sich das Rückschwingen aller 4 Bestromungszustände. Schaltet man nun den Ventilstellantrieb ohne Bezug zum Rückschwingvorgang ab, ergeben sich unterschiedliche Dichtkräfte. Unter Verwendung der erfindungsgemäßen Schrittverlusterkennung kann ein etwaiges Zurückschwingen des Rotors schrittgenau erfasst und bei einem ausgewählten Bestromungsmuster abgeschaltet werden.

Die signifikanten Vorteile und Merkmale der Erfindung gegenüber dem Stand der Technik sind im Wesentlichen:
■ Anwendung des erfindungsgemäßen Verfahrens für eine oder beide Endlage(n) bzw. Ventilsitz(e) des Ventils,
■ geringe Geräuschentwicklung beim Einfahren und Abdichten des Verschlusskörpers in die Endlagen des Ventils und
■ keine Kapselung zur Schallreduktion des Ventilantriebs ist mehr notwendig.

Weitere Merkmale und Vorteile der Erfindung erschließen sich dem Fachmann des Weiteren aus der folgenden detaillierten Beschreibung bevorzugter Ausführungsformen im Hinblick auf die anliegenden Zeichnungen; in diesen zeigen:
- Fig. 1:: Ansteuersequenz eines Schrittmotors aus dem Stand der Technik,
- Fig. 2:: Oszillographenabbild des zeitlichen Verlaufes der Dichtkräfte in einem Ventilantrieb mit Schrittmotor,
- Fig.3:: erfindungsgemäße Ansteuersequenz mit Gruppierung der Sekundärschritte,
- Fig. 4:: erfindungsgemäße Ansteuersequenz mit Frequenzverringerung der Sekundärschritte und
- Fig. 5:: eine Oszillographenabbild der erfindungsgemäßen Ansteuersequenz aus Fig. 3.

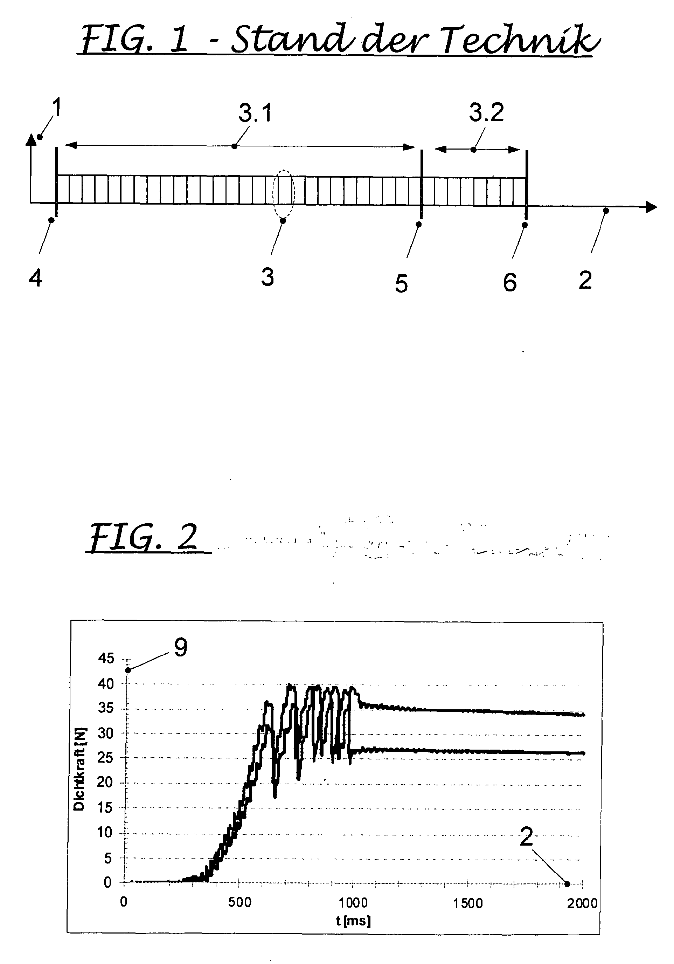

Fig. 1 illustriert eine Ansteuersequenz eines Schrittmotors aus dem Stand der Technik. Dem Schrittmotors ist eine nicht dargestellte Steuerung sowie ein Treiber vorgeschaltet, die zur impulsbetriebenen Phasenansteuerung des mit einem Verschlusskörper des Ventils gekoppelten Schrittmotors vorgesehen sind. Der Verschlusskörper ist schrittweise zwischen einer ersten Endlage 4 und einer zweiten Endlage 6 schrittweise verfahrbar. Unmittelbar vor der zweiten Endlage 6 wird ein Anschlagereignis 5 erfasst. Zwischen der ersten Endlage 4 und dem Anschlagereignis 5 führt der Schrittmotor Primärschritte 3.1 und zwischen dem Anschlagereignis 5 und der zweiten Endlage 6 Sekundärschritte 3.2 aus. Die Frequenz der Primärschritte 3.1 und die Frequenz der Sekundärschritte 3.2 entsprechen einander.

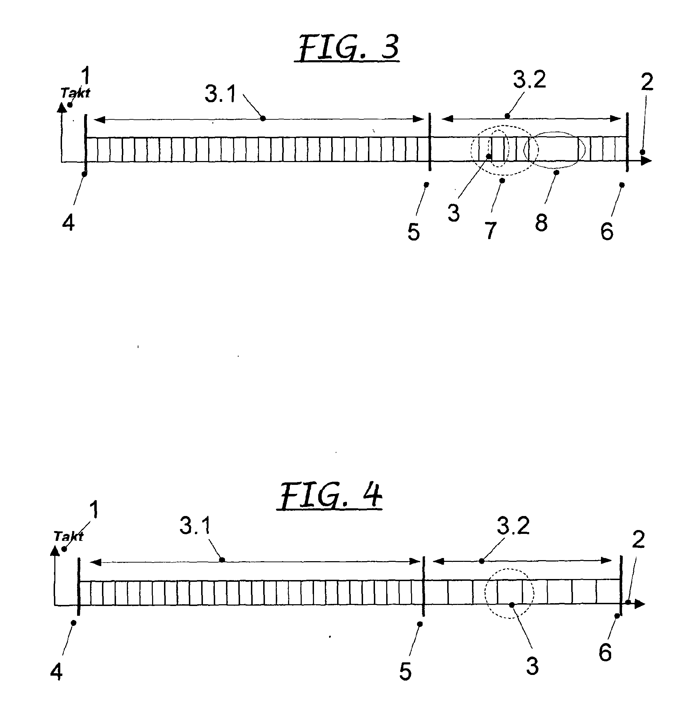

In den Figuren 3 und 4 sind unterschiedliche Ansteuersequenzen des Schrittmotors für den Bereich zwischen dem Anschlagereignis 5 und der zweiten Endlage 6 des Verschlusskörpers illustriert. Die Ansteuersequenz des Schrittmotors im Bereich zwischen der ersten Endlage 4 und dem Anschlagereignis 5 entspricht der Fig. 1.

Die Fig. 2 illustriert ein Oszillographenabbild des zeitlichen Verlaufes der Dichtkräfte in einem Ventilantrieb bei der Fahrt in den Ventilsitz. Den hier dargestellten unterschiedlichen Graphen der Dichtkräfte 9 liegen zwei voneinander verschiedene Bestromungsmuster bzw. Abschaltmustern zugrunde. Da sich diese Bestromungsmuster zum Erreichen einer definierten Dichtkraft 9 jedoch nur durch den Bezug zum Rückschwingen des Rotors ergeben, ist diese Anwendung jedoch nur beim Einsatz der erfindungsgemäßen Schrittverlusterkennung gemäß der Beschreibung zu den Figuren 3 bis 5 möglich.

Gemäß Fig. 3 umfasst die erfindungsgemäße Ansteuersequenz zwischen dem Anschlagereignis 5 und der zweiten Endlage 6 des Verschlusskörpers eine Vielzahl von Schrittgruppen 7, die ihrerseits durch Pausen 8 voneinander abgrenzbar sind. Die Zeitdauer einer Schrittgruppe 7 ist exemplarisch etwa gleichlang wie die Zeitdauer einer Pause 8. Die Anzahl der Sekundärschritte 3.2, also diejenigen Schritte, die zwischen dem Anschlagereignis 5 und der zweiten Endlage 6 durch den Schrittmotor ausgeführt werden, werden in Abhängigkeit der Vorgänge im Ventilsitz festgelegt und können mit einem definierten Bestromungsmuster mit Bezug zum Anschlagereignis beendet werden.

Gemäß Fig. 4 umfasst die erfindungsgemäße Ansteuersequenz zwischen dem Anschlagereignis 5 und der zweiten Endlage 6 des Verschlusskörpers eine Frequenzverringerung der Schritte 3. Das heißt, die in diesem Bereich ausgeführten Sekundärschritte 3.2 weisen eine geringere Frequenz als die zwischen der ersten Endlage 4 und dem Anschlagereignis 5 ausgeführten Primärschritte 3.1 auf. Neben der geringeren Geräuschemission ergeben sich damit meist auch deutliche Verbesserungen der Dichtkräfte des Ventils, da der Schrittmotor bei einem anderen Punkt seiner Moment-Frequenz-Kennlinie betrieben wird bzw. negative Drehmomente durch Resonanzen vermieden werden.

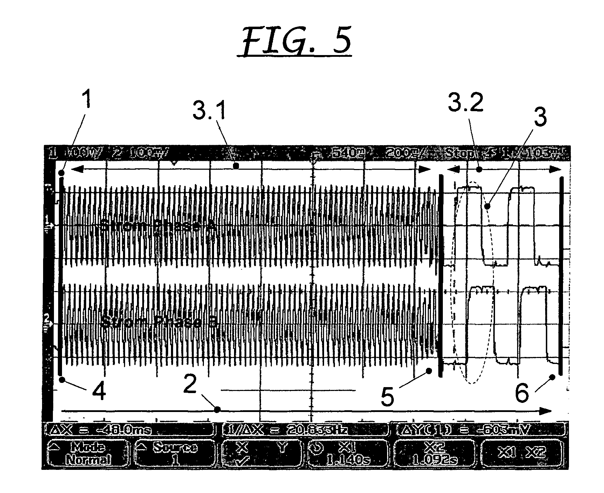

Die Fig. 5 zeigt ein Oszillographenabbild der erfindungsgemäßen Ansteuersequenz aus Fig. 4 am Beispiel eines zweiphasigen Schrittmotors. Die beiden übereinander dargestellten Graphen entsprechen hierbei den Stromverläufen zweier Statorwicklungen. Wie ersichtlich, erfolgt zwischen der ersten Endlage 4 und dem Anschlagereignis 5 eine Beaufschlagung des Schrittmotors mit einer Primärfrequenz. In diesem Bereich werden die vorgebbaren Primärschritte 3.1 absolviert. Unmittelbar vor der zweiten Endlage 6 wird das Anschlagereignis 5 festgestellt, wobei ab diesem Zeitpunkt eine Frequenzverringerung erfolgt, so dass die verbleibenden Sekundärschritte 3.2 bis zum Erreichen der zweiten Endlage 6 mit einer Sekundärfrequenz ausgeführt werden. Es versteht sich, dass durch die Frequenzverringerung im Bereich zwischen Anschlagereignis 5 und der zweiten Endlage 6 das Schließen des Ventils im Bereich zwischen 95% und 100% verzögert wird. Diese zielgerichtete Verzögerung führt jedoch zu einer deutlich wahrnehmbaren Geräuschreduzierung.

### LISTE DER BEZUGSZEICHEN

- 1: Amplitudenachse
- 2: Zeitachse
- 3: Schritt
- 3.1: Primärschritte
- 3.2: Sekundärschritte
- 4: erste Endlage
- 5: Anschlagereignis
- 6: zweite Endlage
- 7: Schrittgruppe
- 8: Pause
- 9: Dichtkräfte

## Patentansprüche

1. Verfahren zur Ansteuerung eines Schrittmotors im Voll- oder Halbschrittbetrieb als geräuschreduzierter Ventilstellantrieb unter Verwendung einer Steuerung mit nachgeschaltetem Treiber, wobei die Steuerung und der Treiber zur impulsbetriebenen Phasenansteuerung des mit einem Verschlusskörper des Ventils gekoppelten Schrittmotors vorgesehen sind, und der Verschlusskörper zwischen einer ersten Endlage (4) und einer zweiten Endlage (6) schrittweise verfahrbar ist, wobei vor dem unmittelbaren Erreichen zumindest einer Endlage (4) eine Schrittverlusterkennung des Schrittmotors als Anschlagereignis (5) durch die Steuerung erfasst wird, und nach Erreichen des Anschlagereignisses (5) der weitere geräuscharme Vortrieb des Verschlusskörpers bis zu einer Endlage (6) entweder mit einer veränderten Schrittfrequenz des Schrittmotors, d. h. im Antiresonanzmode, und/oder mit einer durch Pausen (8) voneinander abgrenzbaren Gruppe (7) von Schritten (3), d. h. im Burstmode, erfolgt.

2. Verfahren nach Anspruch 1, **dadurch gekennzeichnet, dass** die vorgebbare Schrittzahl (3) einer variablen Primärschrittanzahl (3.1) und die Schritte (3) nach dem Anschlagereignisses (5) bis zum Erreichen einer Endlage (6) einer Sekundärschrittanzahl (3.2) entsprechen.

3. Verfahren nach Anspruch 1 oder 2, **dadurch gekennzeichnet, dass** die resonanzarme Schrittbewegung des Antriebs bei veränderter Schrittfrequenz im Antiresonanzmode und/oder die resonanzarme Schrittbewegung des Antriebs mittels Pausen (8) voneinander abgrenzbaren Gruppen (7) von Schritten (3) im Burstmode einen für das menschliche Gehör nicht oder nur schlecht wahrnehmbaren Geräuschpegelwert annimmt.

4. Verfahren nach einem der Ansprüche 1 bis 3, **dadurch gekennzeichnet, dass** die Schrittfrequenz des Schrittmotors verringert wird und die verringerte Sekundärschrittfrequenz etwa das 0,5 bis 0,1-fache der Primärschrittfrequenz beträgt.

5. Verfahren nach einem der Ansprüche 1 bis 4, **dadurch gekennzeichnet, dass** eine Schrittgruppe (7) zwischen 2 und 12 Einzelschritte (3) umfasst.

6. Verfahren nach einem der Ansprüche 1 bis 5, **dadurch gekennzeichnet, dass** auf eine Schrittgruppe (7) eine Pause (8) mit der Zeitdauer von 0,1 s bis 100s folgt.

7. Verfahren nach einem der Ansprüche 1 bis 6, **dadurch gekennzeichnet, dass** die zu absolvierende Sekundärschrittanzahl (3.2) des Verschlusskörpers bis zum Erreichen der Endlage (6) mittels der zusätzlichen Detektierung des Rückschwingens des Rotors aus dem Bestromungsmuster ermittelt wird.
